# EUROPÄISCHE PATENTSCHRIFT

(11) **EP 2 521 657 B1**
(45) Veröffentlichungstag und Bekanntmachung des Hinweises auf die Patenterteilung: **27.05.2015**
(21) Anmeldenummer: 10773596.1
(22) Anmeldetag: 14.10.2010
(51) Int. Cl.: B60C 9/20, B60C 9/12, B60C 9/22, B60C 17/00

(54) **FAHRZEUGLUFTREIFEN**
VEHICLE TYRE
PNEUMATIQUE DE VÉHICULE

(30) Priorität: 07.01.2010 DE 102010000014
(43) Veröffentlichungstag der Anmeldung: 14.11.2012
(73) Patentinhaber: Continental Reifen Deutschland GmbH, 30165 Hannover (DE)
(72) Erfinder: BLÜMEL, Viktor, 30459 Hannover (DE); NOJEK, Rafal, 30161 Hannover (DE)
(74) Vertreter: Finger, Karsten
(86) Internationale Anmeldenummer: PCT/EP2010/065376
(87) Internationale Veröffentlichungsnummer: WO 2011/082844

(56) Entgegenhaltungen:
- EP-A1- 0 849 098
- EP-A1- 2 463 119
- EP-A2- 0 908 329
- EP-A2- 0 960 749
- US-A- 6 082 423

## Beschreibung

Die Erfindung betrifft einen Fahrzeugluftreifen mit zwei oder mehr sich in einem Winkel kreuzenden, Festigkeitsträger aufweisenden Gürtellagen und mit einer, ein- oder mehrlagig ausgeführten, Festigkeitsträger aufweisenden Gürtelbandage, wobei die Festigkeitsträger innerhalb jeder Gürtellage im Wesentlichen parallel und beabstandet zueinander angeordnet und in Kautschukmaterial eingebettet sind. Jede Gürtellage weist bei vorgegebener Dehnung um 1% in Richtung der Festigkeitsträgerlängserstreckung eine Spannung < 17.500 N per dm Breite auf, wobei die Festigkeitsträger der Gürtellagen einen Winkel von 18° bis 45° mit der Umfangsrichtung des Reifens einschließen, wobei die Festigkeitsträger der Gürtelbandage aus einem nicht-metallischen Werkstoff sind, welche innerhalb der Festigkeitsträgerlage im Wesentlichen parallel und beabstandet zueinander in etwa in Reifenumfangsrichtung angeordnet sind und einen Heißschrumpf aufweisen und wobei die Gürtelbandage insgesamt bei vorgegebener Dehnung um 1% eine Spannung > 2.000 N per dm Breite aufweist.

Konstruktionen von Fahrzeugluftreifen sind dem Fachmann hinreichend bekannt. Radialluftreifen weisen u.a. einen Gürtel und häufig eine Gürtelbandage auf. Ein vorgenannter Fahrzeugluftreifen ist aus der US 6,082,423 B bekannt geworden. Um einen spritsparenden Reifen mit geringem Gewicht bereitzustellen, weist der vorgenannte Reifen Rayon-Festigkeitsträger in den Gürtellagen und nicht-metallische Festigkeitsträger in der Gürtelbandage auf.

Aus der EP 0 908 329 A2 ist es ebenfalls bekannt, für die Karkasse und für die Gürtelbandage nicht-metallische Festigkeitsträger einzusetzen.

Aus der EP 0 849 098 A1 bzw. aus der EP 0 960 749 A2 ist es bekannt, Stahlkorde der Konstruktion 2 x 014 mm bis 2 x 042 mm bzw. Stahlkorde der Konstruktion 2 x 0,15 mm bis 2 x 0,40 mm im Reifen einzusetzen.

Der aus zwei oder mehr sich in einem Winkel kreuzenden Gürtellagen bestehende Gürtel sorgt für die Steifigkeit der Lauffläche in Längs- und Querrichtung. Dieses dient beim Fahren der Kraftübertragung, verbessert die Seitenführung und verringert den Abrieb des Reifens. Die aus einer oder mehreren umfangsorientierten Lagen bestehende Gürtelbandage dient im Wesentlichen dazu, zusätzlich Kräfte in Umfangsrichtung aufzunehmen, um beispielsweise das Reifenwachstums aufgrund von Fliehkräften im Betrieb des Reifens zu begrenzen. Die Gürtelbandage kann den Gürtel abdecken, oder aber auch kann die Gürtelbandage insgesamt oder können einzelne Bandagenlagen sich zwischen oder unter den Gürtellagen befinden.

Es ist ebenfalls bekannt und heutzutage üblich, Stahlkorde als Festigkeitsträger in den Gürtellagen des Gürtels einzusetzen. Die Stahlkorde sind innerhalb der Festigkeitsträgerlage im Wesentlichen parallel und beabstandet zueinander angeordnet sind und in Kautschukmaterial eingebettet. In PKW-Luftreifen verbaute Gürtellagen weisen häufig Stahlkorde der Konstruktion 2 x 0,30 mm auf, bei einer Einstellung von 80 epdm oder mehr. Die Kordkonstruktion 2 x 0,30 mm bedeutet, dass zwei Drähte (Filamente) von 0,30 mm Durchmesser miteinander zu einem Kord verdreht sind, so dass der Kord einen Durchmesser von ca. 0,60 mm hat. Die Korde dieses Durchmessers sind lagenbildend in Kautschuk eingebettet. Je größer der Korddurchmesser ist, desto mehr Kautschuk wird für die Einbettung der Korde benötigt und desto schwerer ist jede Gürtellage und der Reifen. Eine vorbeschriebene Gürtellage ist derart konstruiert, dass diese bei einer vorgegebenen Dehnung von 1% eine Spannung größer als 17.500 N per dm Breite aufweist. Nachteilig an den Gürtellagen mit vorgenannten Stahlkorden ist, dass diese vergleichsweise schwer an Gewicht und materialaufwendig sind.

Es ist ebenfalls bekannt und heutzutage üblich, Gürtelbandagen in Kombination mit Stahlgürteln einzusetzen. In Pkw-Luftreifen verbaute Gürtelbandagen weisen häufig ein oder zwei Lagen gummierte Nylonkorde der Konstruktion 940x2 bei 80 epdm auf. Eine derartige Gürtelbandage ist derart konstruiert, dass diese bei einer vorgegebenen Dehnung von 1% in Richtung der Kordlängserstreckung eine Kraft von kleiner oder gleich etwa 1500 N per dm Breite aufbaut. Nylon wird häufig verwendet, weil dieses Material einen Heißschrumpf aufweist, das heißt, es schrumpft bei Erhitzen. Das ist sowohl bei der Vulkanisation des Reifens als auch beim Hochgeschwindigkeitsbetrieb von Vorteil, weil die Gürtelbandage dann den Zusammenhalt des Gürtelpaketes fördert. Außerdem wird dadurch dagegen vorgebeugt, dass die Gürtelbandage beim Betrieb in Kompression gerät, was nachteilig für deren Dauerermüdungsbeständigkeit ist und zu Brüchen des Bandagenmaterials führen kann.

Die Bestrebungen der Reifenentwicklungen gehen beständig dahin, einen kostengünstigen und Reifen mit geringem Gewicht bereitzustellen, bei dem aber die Performance auf einem hohen Niveau gehalten ist.

Es ist daher die Aufgabe der Erfindung, einen kostengünstigen Fahrzeugluftreifen geringen Gewichtes bereitzustellen, der aber dennoch eine gute Performance aufweist.

Die Aufgabe wird gelöst, indem die Festigkeitsträger der Gürtellagen ausschließlich aus Stahl sind und indem die Festigkeitsträger der Gürtelbandage Materialien aus den Klassen Polyester, Nylon sind oder Hybridkonstruktionen aus Rayon, Lyocell, PVA, PEN, POK, Vectran oder Aramid mit Polyester oder Nylon sind.

Erfindungsgemäß ist erreicht, dass Festigkeitsträger mit verringertem Gewicht in den Gürtellagen eingesetzt werden, deren verringerter Modul durch den vergleichsweise hohen Kraftaufbau bei Dehnung der Gürtelbandage kompensiert wird. Die Kosten- und Gewichtsersparnis ist beispielsweise dadurch erzielbar, dass die Anzahl der eingesetzten Festigkeitsträger pro dm oder der Durchmesser der eingesetzten Festigkeitsträger reduziert ist. Die Festigkeitsträger der Gürtellagen können aus zu Korden verdrehten Filamenten bestehen, wobei jedes Filament z.B. einen Durchmesser kleiner als 0,24mm aufweist und die Einstellung kleiner oder gleich 80 epdm ist, oder aus Einzeldrähten von einem Durchmesser kleiner als 0,30mm. Wesentlich für die Festigkeitsträger der Gürtelbandage ist, dass zumindest ein Material des Festigkeitsträgers Heißschrumpfeigenschaften besitzt.

Es ist eine hohe Performance erreicht, da im Betrieb des Reifens eine geeignete dynamische Bodenaufstandsfläche erhalten ist. Durch den Einsatz von Festigkeitsträgern mit verringertem Durchmesser in den Gürtellagen wird das Gewicht des Fahrzeugluftreifens vorteilhafterweise reduziert. Der erfindungsgemäße Reifen ist kostengünstig, weist aufgrund seines verringerten Gewichtes einen verbesserten Rollwiderstand auf und besitzt zudem eine verbesserte Hochgeschwindigkeitstauglichkeit.

Vorteilhaft ist es, wenn die Festigkeitsträger der Gürtellage Korde aus dem Festigkeitsbereich High-Tensile (HT) oder Ultra-High-Tensile (UHT) sind. Die Festigkeitsträger des High-Tensile-Bereichs weisen, je nach Filamentdurchmesser, eine Bruchfestigkeit von etwa 3000 MPa bis 3500MPa auf, während entsprechende Festigkeitsträger des Ultra-High-Tensile-Bereichs eine um etwa 500 MPa höhere Festigkeit aufweisen.

Wesentlich ist, dass die Konstruktionen der Festigkeitsträger der Gürtellagen und der Bandage aufeinander erfindungsgemäß eingestellt sind, um im Betrieb des Reifens eine geeignete dynamische Bodenaufstandsfläche zu erhalten. Die Gürtelbandage kann gespult sein und ein lückenhaftes Spulmuster aufweisen, derart, dass die effektive Korddichte verringert ist.

Da der erfindungsgemäße Reifen an Gewicht verringert ist, bietet sich der Einsatz in vergleichsweise schweren Notlaufreifen wie in einem SSR-Reifen oder einem Reifen mit einer radial innen an der Reifeninnenschicht angeordneten, selbsthaftenden viskosen Dichtschicht an.

Das "Mehrgewicht" dieser Notlaufreifen kann vorteilhafterweise durch die vorbeschriebene Gürtellagen- und Bandagenkonstruktion kompensiert werden. SSR-Reifen (Self-Supporting-Runflat) sind Reifen mit Verstärkungsprofilen in den Reifenseitenwänden, durch die der Reifen auch bei Entlüftung über eine gewisse Fahrstrecke selbsttragend erhalten bleibt. Reifen mit Dichtschicht, welche sich zwischen den Schultern unter dem Laufstreifen auf der Reifeninnenschicht befindet, zeichnen sich dadurch aus, dass, wenn ein Fremdkörper die Lauffläche des Fahrzeugluftreifens penetriert, dieser durch die Dichtschicht umschlossen wird und einem eventuellen Luftverlust durch quasi sofortiges Abdichten vorbeugt.

Ein bevorzugtes Beispiel einer erfindungsgemäßen Konstruktion eines PKW-Reifens der Reifendimension 225/45 R 17 weist einen 2-lagigen Gürtel aus HT-Stahl-Korden der Konstruktion 2 x 0,175 bei etwa 80 epdm auf, wobei die HT-Stahl-Korde einen Winkel von 28° mit der Reifenumfangsrichtung einschließen, und weist eine 1-lagige Bandage mit Korden aus Polyester der Konstruktion 1440 x 2 bei in etwa 105 epdm auf, wobei die Korde aus Polyester in etwa in Reifenumfangsrichtung angeordnet sind und die Gürtellagen abdecken. Jede Gürtellage weist bei vorgegebener Dehnung um 1% in Richtung der Festigkeitsträgerlängserstreckung eine Spannung von etwa 8.700 N per dm Breite auf und die Gürtelbandage weist bei vorgegebener Dehnung um 1% eine Spannung von etwa 2.000 N per dm Breite auf. Im Betrieb des PKW-Reifens ist eine geeignete dynamische Bodenaufstandsfläche erhalten.

Der erfindungsgemäße Fahrzeugluftreifen kann ein PKW-, Van-, oder ein Light Truck-Luftreifen sein.

## Patentansprüche

1. Fahrzeugluftreifen mit zwei oder mehr sich in einem Winkel kreuzenden, Festigkeitsträger aufweisenden Gürtellagen und mit einer, ein- oder mehrlagig ausgeführten, Festigkeitsträger aufweisenden Gürtelbandage, wobei die Festigkeitsträger innerhalb jeder Gürtellage im Wesentlichen parallel und beabstandet zueinander angeordnet und in Kautschukmaterial eingebettet sind, wobei jede Gürtellage bei vorgegebener Dehnung um 1% in Richtung der Festigkeitsträgerlängserstreckung eine Spannung < 17.500 N per dm Breite aufweist, wobei die Festigkeitsträger der Gürtellagen einen Winkel von 18° bis 45° mit der Umfangsrichtung des Reifens einschließen, wobei die Festigkeitsträger der Gürtelbandage aus einem nicht-metallischen Werkstoff sind, welche innerhalb der Festigkeitsträgerlage im Wesentlichen parallel und beabstandet zueinander in etwa in Reifenumfangsrichtung angeordnet sind und einen Heißschrumpf aufweisen, und wobei die Gürtelbandage insgesamt bei vorgegebener Dehnung um 1% eine Spannung > 2.000 N per dm Breite aufweist, **dadurch gekennzeichnet, dass** die Festigkeitsträger der Gürtellagen ausschließlich aus Stahl sind und dass die Festigkeitsträger der Gürtelbandage Materialien aus den Klassen Polyester, Nylon sind oder Hybridkonstruktionen aus Rayon, Lyocell, PVA, PEN, POK, Vectran oder Aramid mit Polyester oder Nylon sind.

2. Fahrzeugluftreifen nach Anspruch 1,
**dadurch gekennzeichnet, dass** die Festigkeitsträger der Gürtellage Stahl-Korde aus dem High-Tensile (HT) - oder aus dem Ultra-High-Tensile (UHT) - Festigkeitsbereich sind.

3. Fahrzeugluftreifen nach Anspruch 2,
**dadurch gekennzeichnet, dass** die Korde der Gürtellage die Konstruktion 2 x 0,175 aufweisen und in jeder Gürtellage mit etwa 110 epdm angeordnet sind.

4. Fahrzeugluftreifen nach einem oder mehreren der vorangehenden Ansprüche,
**dadurch gekennzeichnet, dass** der Festigkeitsträger der Gürtelbandage ein Polyester-Kord der Konstruktion 1440 x 2 bei 105 epdm ist.

5. Fahrzeugluftreifen nach einem oder mehreren der vorangehenden Ansprüche,
**dadurch gekennzeichnet, dass** die Festigkeitsträger jeder Gürtellage einen Winkel von 27° bis 35°, vorzugsweise von etwa 28° mit der Reifenumfangsrichtung einschließen.

6. Fahrzeugluftreifen nach einem oder mehreren der vorangehenden Ansprüche,
**dadurch gekennzeichnet, dass** die Gürtellagen geschnittene Gürtellagen sind.

7. Fahrzeugluftreifen nach einem oder mehreren der vorangehenden Ansprüche,
**dadurch gekennzeichnet, dass** der Fahrzeugluftreifen Notlaufeigenschaften durch unterhalb des Gürtels im Reifenschulterbereich und innerhalb der Seitenwände des Reifens angeordnete, im Querschnitt mondsichelförmige, über den Umfang der Seitenwand ringförmig geschlossene Verstärkungsprofile aufweist.

8. Fahrzeugluftreifen nach einem oder mehreren der vorangehenden Ansprüche 1 - 6,
**dadurch gekennzeichnet, dass** der Fahrzeugluftreifen radial innen an der Reifeninnenschicht eine selbsthaftende viskose Dichtschicht aufweist.

## Claims

1. Pneumatic vehicle tyre with two or more bracing plies, intersecting one another at an angle and having reinforcing elements, and with a bracing bandage, made up of one or more plies and having reinforcing elements, wherein the reinforcing elements within each bracing ply are arranged substantially parallel to and at a distance from one another and are embedded in rubber material, wherein, under a predetermined extension of 1% in the direction of the longitudinal extent of the reinforcing elements, each bracing ply has a tension of < 17 500 N per dm of width, wherein the reinforcing elements of the bracing plies form an angle of 18° to 45° with the circumferential direction of the tyre, wherein the reinforcing elements of the bracing bandage are of a non-metallic material, are arranged within the reinforcing element ply substantially parallel to and at a distance from one another approximately in the circumferential direction of the tyre and have heat shrinkage properties, and wherein, under a predetermined extension of 1%, the bracing bandage as a whole has a tension of > 2000 N per dm of width, **characterized in that** the reinforcing elements of the bracing plies are made exclusively of steel and **in that** the reinforcing elements of the bracing bandage comprise materials from the classes of polyester or nylon or hybrid structures of rayon, lyocell, PVA, PEN, POK, Vectran or aramid with polyester or nylon.

2. Pneumatic vehicle tyre according to Claim 1,
**characterized in that** the reinforcing elements of the bracing ply comprise steel cords from the high-tensile (HT) or ultra-high-tensile (UHT) strength range.

3. Pneumatic vehicle tyre according to Claim 2,
**characterized in that** the cords of the bracing ply have the structure 2 x 0.175 and are arranged in each bracing ply with approximately 110 epdm.

4. Pneumatic vehicle tyre according to one or more of the preceding claims,
**characterized in that** the reinforcing element of the bracing bandage comprises a polyester cord of the structure 1440 x 2 with 105 epdm.

5. Pneumatic vehicle tyre according to one or more of the preceding claims,
**characterized in that** the reinforcing elements of each bracing ply form an angle of 27° to 35°, preferably of approximately 28°, with the circumferential direction of the tyre.

6. Pneumatic vehicle tyre according to one or more of the preceding claims,
**characterized in that** the bracing plies are cut bracing plies.

7. Pneumatic vehicle tyre according to one or more of the preceding claims,
**characterized in that** the pneumatic vehicle tyre has runflat properties by way of cross-sectionally crescent-shaped reinforcing profiles arranged under the belt in the shoulder region of the tyre and within the sidewalls of the tyre, and closed in an annular manner over the circumference of the sidewall.

8. Pneumatic vehicle tyre according to one or more of the preceding Claims 1-6,
**characterized in that** the pneumatic vehicle tyre has radially inwards on the inner layer of the tyre a self-adhesive viscous sealing layer.

## Revendications

1. Bandage pneumatique pour roue de véhicule présentant deux ou plusieurs couches de ceinture qui présentent des renforts et qui se croisent obliquement et un bandage de ceinture réalisé en une ou plusieurs couches et présentant des renforts, les renforts présents à l'intérieur de chaque couche de ceinture étant disposés essentiellement parallèlement les uns aux autres et à distance mutuelle et incorporés dans un matériau de caoutchouc, chaque couche de ceinture présentant une contrainte < 17 500 N par dm de largeur pour un allongement prédéterminé de 1 % dans la direction de l'extension longitudinale des renforts, les renforts des couches de ceinture formant un angle de 18° à 45° avec la direction périphérique du bandage de roue, les renforts du bandage de ceinture étant constitués d'un matériau non métallique, étant disposés à l'intérieur de la couche de renfort essentiellement parallèlement les uns aux autres et à distance mutuelle, sensiblement dans la direction périphérique du bandage de roue et présentant un retrait à la chaleur, le bandage de ceinture présentant globalement une contrainte > 2 000 N par dm de largeur à un allongement prédéterminé de 1 %,
**caractérisé en ce que**
les renforts des couches de ceinture sont exclusivement réalisés en acier et
**en ce que** les renforts du bandage de ceinture sont réalisés en matériaux des classes du polyester et du nylon ou sont des structures hybrides de rayonne, de Lyocell, de PVA, de PEN, de POK, de Vectran ou d'aramide avec du polyester ou du nylon.

2. Bandage pneumatique pour roue de véhicule selon la revendication 1, **caractérisé en ce que** les renforts de la couche de ceinture sont des câbles en acier de la plage de résistance en traction élevée (HT) ou ultra-élevée (UHT).

3. Bandage pneumatique pour roue de véhicule selon la revendication 2, **caractérisé en ce que** les câbles de la couche de ceinture présentent une structure 2 x 0,175 et sont disposés dans chaque couche de ceinture à environ 110 epdm.

4. Bandage pneumatique pour roue de véhicule selon l'une ou plusieurs des revendications précédentes, **caractérisé en ce que** le renfort de bandage de ceinture est un câble de polyester de structure 1 440 x 2 à 105 epdm.

5. Bandage pneumatique pour roue de véhicule selon l'une ou plusieurs des revendications précédentes, **caractérisé en ce que** les renforts de chaque couche de ceinture forment un angle de 27° à 35° et de préférence d'environ 28° avec la direction périphérique du bandage de roue.

6. Bandage pneumatique pour roue de véhicule selon l'une ou plusieurs des revendications précédentes, **caractérisé en ce que** les couches de ceinture sont des couches de ceinture découpées.

7. Bandage pneumatique pour roue de véhicule selon l'une ou plusieurs des revendications précédentes, **caractérisé en ce que** le bandage pneumatique pour roue de véhicule présente des propriétés de roulage de secours grâce à des profilés de renfort en anneau fermé disposés au-dessus de la périphérie de la paroi latérale, en forme de croissant de lune en section transversale, disposés en dessous de la ceinture dans la zone d'épaulement du bandage de roue et à l'intérieur des parois latérales du bandage de roue.

8. Bandage pneumatique pour roue de véhicule selon l'une ou plusieurs des revendications 1 à 6 qui précèdent, **caractérisé en ce que** le bandage pneumatique pour roue de véhicule présente du côté radialement intérieur une couche de recouvrement visqueuse auto-adhésive sur la couche intérieure du bandage de roue.
